# EUROPÄISCHE PATENTANMELDUNG

(11) **EP 1 845 276 A1**
(43) Veröffentlichungstag der Anmeldung: **17.10.2007**
(21) Anmeldenummer: 07007425.7
(22) Anmeldetag: 11.04.2007
(51) Int. Cl.: F16D 55/39

(54) **Bremsvorrichtung, Bremsscheibenanordnung und Bremselementanordnung**

(30) Priorität: 11.04.2006 DE 102006017039
(71) Anmelder: Bubenzer Bremsen Gerhard Bubenzer Ing. GmbH, 57548 Kirchen-Wehbach (DE)
(72) Erfinder: Treude, Hans-Walter, 57234 Wilnsdorf (DE)
(74) Vertreter: Samson & Partner

(57) **Zusammenfassung**

Die vorliegende Erfindung betrifft eine Bremsvorrichtung, die beispielsweise als Industriescheibenbremse ausgebildet ist, und welche eine Bremselementanordnung und eine Bremskörperanordnung aufweist. Die Bremselementanordnung weist scheibensegmentartige Bremselement (10,23) auf, von denen zwei (10) verstellbar sind. Die Bremskörperanordnung wird von zwei mittels einer Nabe (16) mit einer Bremswelle drehfest gekoppelten Bremsscheiben (15) gebildet, die so angeordnet sind, daß deren Radialflächen (22,24) jeweils mit den scheibensegmentartig ausgebildeten und angeordneten Bremselementen (10,23) im Eingriff stehen, wenn die verstellbaren Bremselemente (10) ihre Bremsstellung einnehmen. Die Erfindung betrifft ebenfalls eine entsprechende Bremsscheibenanordnung sowie eine Bremselementanordnung, welche zur Verwendung in einer erfindungsgemäßen Bremsvorrichtung geeignet sind.

## Beschreibung

Die vorliegende Erfindung betrifft eine Bremsvorrichtung, die eine Bremselementanordnung und eine drehbare Bremskörperanordnung aufweist. Dabei sind zwei verstellbare Bremselemente vorgesehen, die in ihrer Bremsstellung eine mechanische Bremswirkung auf die Bremskörperanordnung ausüben. Solche Bremsvorrichtungen sind z.B. als Industriescheibenbremsen üblich. Industriebremsen müssen sehr schnell hohe Bremskräfte aufbauen, um in kurzer Zeit über die Bremswelle maximale Verzögerungen der zu bremsenden Massen zu erreichen. Die gewünschte Verzögerung wird durch Reibung zwischen einer gemeinsam mit der Bremswelle drehbaren Bremskörperanordnung und einer relativ zu dieser feststehenden Bremselementanordnung erzielt.

Für starke Bremswirkungen zum Abbremsen großer Massen bzw. schnell umlaufender Rotationsmassen sind entsprechend große Bremsscheiben und entsprechend dimensionierte Bremselemente erforderlich. Große Bremsscheiben weisen jedoch selbst relativ hohe Schwungmassen auf, die ebenfalls mit abgebremst werden müssen, und haben einen entsprechend erhöhten Platzbedarf. Auch kann die geometrisch bedingte erhöhte Wärmekapazität zu thermischen Problemen führen.

Davon ausgehend besteht die Aufgabe der vorliegenden Erfindung darin, eine verbesserte Bremsvorrichtung bereitzustellen, welche bei beherrschbaren Bremskräften und kompakter Bauweise möglichst eine erhöhte Bremswirkung erzielt. Daneben besteht die Aufgabe, eine Bremselementanordnung und eine Bremskörperanordnung zu realisieren, welche jeweils für eine solche Bremsvorrichtung geeignet sind.

Diese Aufgabe wird durch eine erfindungsgemäße Bremsvorrichtung gemäß Anspruch 1 gelöst sowie durch die Ansprüche 12 und 13, die jeweils eine Bremskörperanordnung bzw. eine Bremselementanordnung zur Verwendung in einer solchen Bremsvorrichtung betreffen.

Gemäß Anspruch 1 ist dabei eine Bremskörperanordnung mit wenigstens zwei Bremsscheiben vorgesehen, die drehfest mit einer Bremswelle gekoppelt sind. Die Bremsscheiben sind dabei so ausgebildet und angeordnet, daß deren Radialflächen mit scheibensegmentartig ausgebildeten und angeordneten Bremselementen reibend im Eingriff stehen, wenn das verstellbare Bremselement seine Bremsstellung einnimmt. Auf diese Weise läßt sich zum Beispiel bei zwei Bremsscheiben etwa eine Verdopplung der Bremskraft in einer Bremsvorrichtung erreichen, die im Vergleich zu einer entsprechend ausgeführten Bremsvorrichtung mit einer vergrößerten Bremsscheibe und entsprechend vergrößerten Bremselementen insgesamt wesentlich leichter und kompakter ausgebildet sein kann. Dies gilt sowohl für die zusätzlich aufgebrachte Bremsmasse, die weitgehend in den Bremsscheiben enthalten ist, als auch für die erforderliche Betätigungsmechanik für die Bremselementanordnung, die gegenüber einer Einscheibenbremse mit den gleichen Abmessungen nur geringfügig aufwendiger und schwerer gestaltet werden muß.

Die Weiterbildungen gemäß der Ansprüche 2 bis 4 betreffen die Gestaltung der Bremsscheiben, die gemäß Anspruch 2 wenigstens im Wirkungsbereich der Bremselemente axial zur Bremswelle bewegbar angeordnet sind und insbesondere zu dieser relativ axial verschiebbar sein können. Diese Ausführung vereinfacht das Justieren der Bremsscheiben zu den Bremselementen in axialer Richtung. Insbesondere können beim Bremsen, d.h. beim Schließen der Bremsvorrichtung, die ebenfalls in axialer Richtung zur Bremswelle durchgeführten Bremsbewegungen der Bremselemente von den Bremsscheiben aufgenommen werden, so daß sich Bremselemente und Bremsscheiben beim Bremsvorgang ohne weiteres aneinander ausrichten. Nach Anspruch 3 sind die Bremsscheiben dabei über eine Nabe mit der Bremswelle gekoppelt. Dadurch können die Bremsscheiben als Baugruppe gemeinsam mit der Nabe auf die Bremswelle aufgebracht werden und über die axiale Positionierung der Nabe auf der Welle zu den Bremselementen voreingestellt werden. Die Feinjustierung der Bremsscheiben zu den Bremselementen erfolgt beim eigentlichen Bremsvorgang, d.h. beim Schließen der Bremsvorrichtung. Eine entsprechende Gestaltung der Nabe verbessert auch die Wärmeabfuhr der von den Bremsscheiben aufgenommenen Reibungswärme, ohne daß die Gefahr besteht, daß eine Überhitzung der Bremswelle selbst eintritt. Die Kopplung der Bremsscheiben über einen in Umfangsrichtung der Bremswelle wirkenden Formschluß (Anspruch 4) stellt eine besonders einfache Lösung dar, bei der zum einen eine widerstandsfähige zuverlässige kraftschlüssige Verbindung in Umfangsrichtung zur Bremswelle besteht und zum anderen die erforderliche Axialbewegung der Bremsscheiben auf einfache Weise gewährleistet bleibt, und zwar unabhängig davon, ob sich die Bremsscheiben erwärmen oder nicht. Der Formschluß kann beispielsweise über ein Vielkantprofil erfolgen. Es können aber auch andere geeignete formschlüssige Verbindungen gewählt werden, die zum Beispiel einen verbesserten Wärmeübergang zwischen Bremsscheibe und Nabe gewährleisten, die geringe Kerbwirkungen in der Nabe bzw. in der entsprechenden Öffnung der Bremsscheibe hervorrufen, oder solche, die fertigungstechnisch besonders vorteilhaft sind.

Die Ansprüche 5 bis 7 betreffen Bremselementanordnungen. Dabei sind gemäß Anspruch 5 zwei verstellbare Bremselemente vorgesehen, die jeweils an den nach außen weisenden Radialflächen der beiden äußeren Bremsscheiben angreifen. Die beiden Bremselemente wirken dabei zangenartig auf die Bremsflächen. In der Weiterbildung nach Anspruch 6 ist dabei zwischen den zueinander weisenden Radialflächen zweier benachbarter Bremsscheiben ein passives Bremselement vorgesehen, das mit diesen "inneren" Radialflächen im Eingriff steht, wenn ein verstellbares Bremselement oder auch mehrere verstellbaren Bremselemente seine bzw. ihre Bremsstellung einnehmen. So stützen sich Bremselemente und Bremskörper axial gegeneinander ab, ohne daß die Bremskörper, d.h. die Bremsscheiben, Axialkräfte auf die Bremswelle ausüben.

Nach Anspruch 7 dient ein feststehendes Bremselement gleichzeitig als axialer Anschlag für die Bremsscheiben, d.h. die Bremsscheiben richten sich bei geschlossener Bremse an diesem feststehenden Bremselement aus. So kann ein an den Bremselementen und den Bremsscheiben auftretender Verschleiß einfach ausgeglichen werden, indem lediglich der Bremsweg des oder der verstellbaren Bremselemente in bekannter Weise nachgestellt bzw. dem Verschleiß entsprechend nachgeführt wird. Die Bremsscheiben richten sich bei jedem Bremsvorgang entsprechend am feststehenden Bremselement aus.

Die Weiterbildungen gemäß der Ansprüche 8 und 9 betreffen die Ansteuerung des bzw. der verstellbaren Bremselemente, die nach Anspruch 8 an einem Bremshebelgestänge angeordnet sind, welches über eine entsprechende Stelleinrichtung betätigbar ist, während nach Anspruch 9 das verstellbare Bremselement direkt über eine Stelleinrichtung, zum Beispiel einen hydraulisch lösbaren Linearantrieb, verstellbar ist. Eine solche Stelleinrichtung kann hier auch an jedem verstellbaren Bremselement vorgesehen sein.

Nach Anspruch 10 ist die Bremselementanordnung und damit die Bremselemente an einem gemeinsamen Trägerelement, zum Beispiel einer Grundplatte, angeordnet, welches die Bremskräfte aufnimmt. So können die Bremskörperanordnung, d.h. die Bremsscheiben, und die Bremselementanordnung jeweils unabhängig voneinander vormontiert werden und dann ohne aufwendige Einzeljustage in gewünschter Weise zueinander angeordnet werden.

Anspruch 11 betrifft Werkstoffe für die Bremsscheiben bzw. für die Bremselemente, die entsprechende Bremsbeläge aufweisen. Dabei haben sich für die Bremsscheiben Leichtmetall-, insbesondere Aluminiumlegierungen und für die Bremselemente Sinterwerkstoffe und dabei insbesondere Sintermetallwerkstoffe bewährt.

Anspruch 12 betrifft eine Bremsscheibenanordnung zur Verwendung in einer erfindungsgemäßen Bremsvorrichtung, welche wenigstens zwei Bremsscheiben aufweist, die drehfest mit einer Bremswelle koppelbar sind. Zusätzlich kann eine solche Bremsscheibenanordnung weitere in den anhängenden Ansprüchen und der nachfolgenden Beschreibung angegebene Merkmale aufweisen.

Anspruch 13 betrifft eine Bremselementanordnung zur Verwendung in einer erfindungsgemäßen Bremsvorrichtung, welche ebenfalls Merkmale aufweisen kann, die in den anhängenden Ansprüchen und der Beschreibung angegeben sind.

Ein Ausführungsbeispiel der vorliegenden Erfindung wird anhand der nachfolgenden Zeichnungen erläutert. In diesen zeigen
- Fig. 1: eine perspektivische Ansicht eines Ausführungsbeispiels der vorliegenden Erfindung,
- Fig. 2: eine perspektivische Ansicht einer erfindungsgemäßen Bremsscheibenanordnung zusammen mit einer erfindungsgemäßen Bremselementanordnung,
- Fig. 3: die Anordnung aus Fig. 2, bei der ein bewegliches Bremselement weggelassen wurde, um das feststehende Bremselement zu zeigen, und
- Fig. 4: die in den Fig. 2 und 3 dargestellte Anordnung aus einer anderen Perspektive.

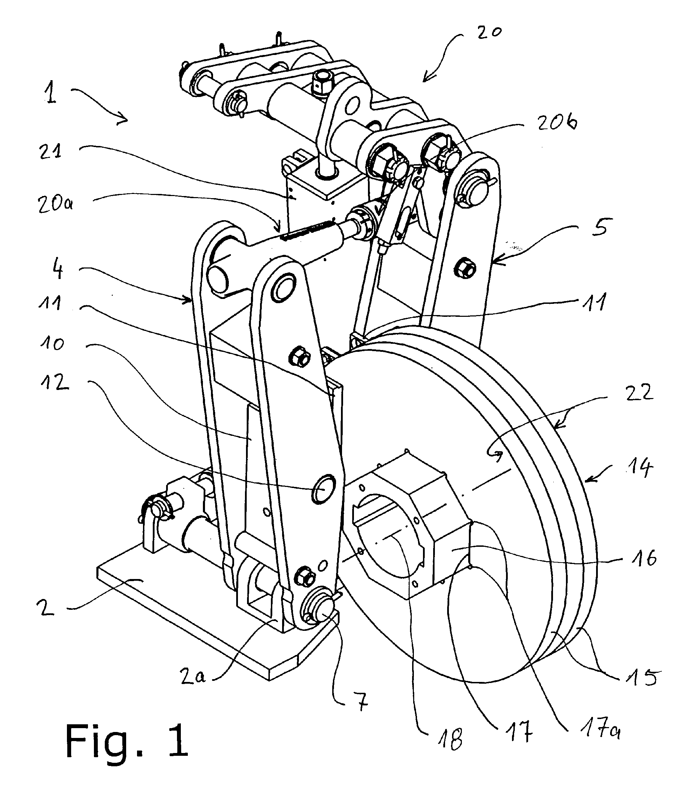

Fig. 1 zeigt eine Doppelscheibenbremse 1, bei der auf einer Grundplatte 2 zwei im wesentlichen senkrecht zu dieser verlaufende Bremshebel 4, 5 angeordnet sind, die an ihren unteren Enden über Haltebolzen 7 und Haltesockel 2a mit der Grundplatte 2 gelenkig verbunden sind. Die Bremshebel 4, 5 tragen jeweils ein bewegliches Bremselement 10, welches mit einem Bremsbelag 11 versehen ist, der entweder direkt oder über einen Zwischenträger (nicht dargestellt) mit dem Bremselement 10 verbunden ist. Die Bremselemente 10 sind jeweils über Verbindungsbolzen 12 gelenkig an den Bremshebeln 4, 5 aufgehängt und einander gegenüberliegend angeordnet und umgreifen den Randbereich einer Bremskörperanordnung 14, welche zwei Bremsscheiben 15 aufweist, die auf einer Nabe 16 angeordnet ist. Die Bremshebel 4, 5 sind dabei über eine Koppelstange 20a so miteinander gekoppelt, daß ein Verschleiß der Bremsbeläge 11, der Bremsbelagelemente 25 und/oder der Bremsscheiben 15 während der Bremsbewegung durch einen Nachstellmechanismus 20b angeglichen wird.

Die Nabe 16 ist koaxial und drehfest zur (nicht-dargestellten) Bremswelle angeordnet, die die Bremskraft auf die entsprechenden abzubremsenden Massen (ebenfalls nicht dargestellt) überträgt. An ihrer Außenseite weist die Nabe 16 ein Achtkantprofil auf, welches entsprechende zentrale Öffnungen 17 in den Bremsscheiben 15 durchsetzt. Die Ecken dieser zentralen Öffnungen 17 sind mit Ausrundungen 17a versehen, um bei den auftretenden Bremsbelastungen dort Spannungsspitzen zu vermeiden. Die Bremsscheiben 15 sind so drehfest mit der Nabe und ebenso mit der Bremswelle 16 verbunden, aber axial in Richtung der Bremswellenachse 18 verschiebbar.

Über das Koppelgestänge 20 ist die Bremsfederanordnung 21 mit den Bremshebeln 4, 5 so gekoppelt, daß bei ungehinderter Wirkung der Bremsfederanordnung 21 das Koppelgestänge 20 die beiden Bremshebel 4, 5 zusammendrückt und damit die beweglichen Bremselemente 10 mit ihren Bremsbelägen 11 gegen die nach außen weisenden Radialflächen 22 der Bremsscheiben 15 drücken.

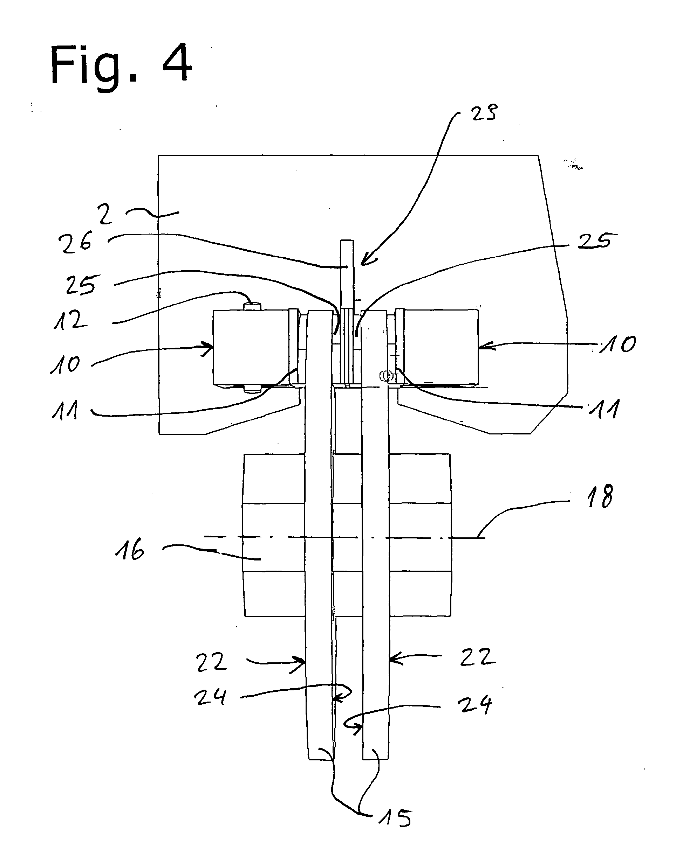

Fig. 4 zeigt das feststehende Bremselement 23, das zwischen den nach innen weisenden Radialflächen 24 der Bremsscheiben 15 angeordnet ist. Das feststehende Bremselement 23 weist zwei Bremsbelagelemente 25 auf, die über eine Trägerlasche 26 ebenfalls mit der Grundplatte 2 gekoppelt sind. Die Trägerlasche 26 ist fest mit der Grundplatte 2 verbunden.

Durch die Wirkung der Bremsfederanordnung 21 werden die beweglichen Bremselemente 10 über die Bremshebel 4, 5 gegeneinander gedrückt und wirken über die Bremsbeläge 11 in Richtung der Bremswellenachse 18 gegeneinander. Dabei werden die Bremsscheiben 15 auf der Nabe 16 aufeinander zu verschoben und drücken mit ihren einander gegenüberliegenden nach innen weisenden Radialflächen 24 gegen das feststehende Bremselement 23 bzw. gegen die Bremsbelagelemente 25.

Das festsitzende Bremselement 23 wirkt dabei als Anschlag, welcher die Bremsscheiben bei Betätigung der Doppelscheibenbremse 1 in axialer Richtung auf der Nabe 16 bzw. der Bremswelle positioniert.

Die auftretenden Bremskräfte werden über die Trägerlasche 26 bzw. über die Bremshebel 4, 5, die Haltebolzen 7 und die Haltesockel 2a in die Grundplatte 2 eingeleitet. Die Grundplatte 2 ist bezüglich der Bremswelle fest verankert und baut so eine entsprechende, die abzubremsenden Massen verzögernde Gegenkraft an den Bremsscheiben 15 auf.

Zum Lösen der Bremsvorrichtung 1 greift ein nicht-dargestelltes Lüftgerät entgegen der Federwirkung der Bremsfederanordnung 21 am Koppelgestänge 20 an und bewegt die Bremshebel 4, 5 auseinander. Dadurch lösen sich die Bremselemente 10 von den Bremsscheiben 15 und heben die Bremskraft auf, so daß die Bremsscheiben 15 wieder frei drehbar zwischen den Bremselementen 10 und 23 verlaufen.

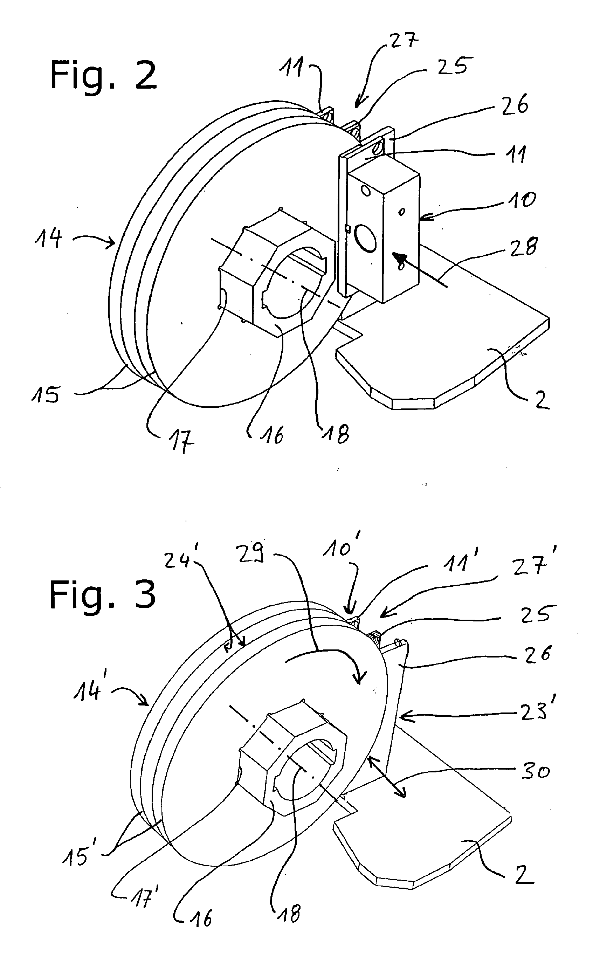

Fig. 2 zeigt die Bremskörperanordnung 14, welche die Bremsscheiben 15 und die Nabe 16 umfaßt, und die Bremselementanordnung 27, welche die beweglichen Bremselemente 10 und das feststehende Bremselement 23 umfaßt, ohne das Koppelgestänge 20. Aus dieser Darstellung ist ersichtlich, daß die durch den Pfeil 28 angedeutete Bremskraft auch direkt über ein nicht-dargestelltes Bremselement, beispielsweise durch einen Hydraulikzylinder (nicht dargestellt), auf die Bremsscheiben 15 aufgebracht werden kann.

Fig. 3 zeigt eine Ausführung, bei der das dargestellte passive Bremselement 23' in Pfeilrichtung 30 relativ zur Grundplatte 2 beweglich angeordnet ist, während das Bremselement 10' fest mit der Grundplatte 2 bzw. einem Trägerkörper gekoppelt ist. Bei dieser Ausführung wird die Bremskraft über ein verstellbares Bremselement 10 (in Fig. 3 nicht dargestellt) auf die eine Außenseite der Bremsscheibe 15' aufgebracht. Dieses verstellbare Bremselement 10 schiebt die Bremsscheibe 15' gegen das passive Bremselement 23', welches sich auf der Grundplatte 2 verschiebend an die andere Bremsscheibe 15' anlegt, diese gegen das feststehende Bremselement 10' verschiebt und so die Bremskraft überträgt. Bei dieser Ausführung dient das feststehende Bremselement 10' als Anschlag für die Bremskörperanordnung 14' und die Bremselementanordnung 27'. Bei der durch den Pfeil 29 angegebenen Drehrichtung der Bremskörperanordnung 14' braucht sich das passive Bremselement 23' nur mit seiner Unterseite auf der Grundplatte 2 abzustützen und ist in Richtung der Bremswellenachse 18 verschiebbar.

In Ausführungen mit anderer Drehrichtung und anderen Einbaulagen der Bremsvorrichtung 1 kann aber auch eine entsprechende Linearführung für das passive Bremselement 23' vorgesehen sein (z.B. Führungsnut), welche das passive Bremselement 23' relativ zur Grundplatte fixiert aber die axiale Verschiebbarkeit zuläßt.

Es gibt auch Ausführungen, bei denen mehr als zwei Bremsscheiben 15, 15' auf der Nabe 16 angeordnet sind, die sich dann beim Bremsen entweder an einem zentralen fest mit der Grundplatte 2 verbundenen Bremselement 23 ausrichten bzw. an einem äußeren festsitzenden Bremselement 10', je nachdem, ob die Bremskraft von einem einzigen oder von zwei gegeneinander wirkenden Bremselementen 10 aufgebracht wird. Bei dieser Ausführung sind dann entsprechend der Bremsscheibenanzahl bezüglich der Grundplatte 2 verschiebliche passive Bremselemente 23' zwischen den Bremsscheiben 15, 15' angeordnet.

In einer weiteren nicht-dargestellten Ausführung können auch einander entsprechende Bremselementanordnungen 27, 27', z.B. bezüglich der Bremswelle einander gegenüberliegend, an einem Bremsscheibensatz 15, 15' angreifen. Bei so einer Anordnung wird kein Biegemoment auf die Bremswelle übertragen, sondern nur ein Torsionsmoment (das Bremsmoment). Dies kann z.B. dann vorteilhaft sein, wenn die Bremskörperanordnung 14, 14' am freien Ende der Bremswelle angeordnet ist. So eine Anordnung erlaubt ein weiter erhöhtes Bremsmoment und/oder eine noch kompaktere Bremselementanordnung 27, 27' bzw. Bremskörperanordnung 14, 14'.

Die Doppel- bzw. Mehrscheibenanordnung ermöglicht eine Gewichtsreduzierung der Bremsvorrichtung gegenüber einer gleichwertigen Einscheibenbremsvorrichtung von ca. 30%. Gleichzeitig ist die Wärmeabfuhr verbessert, da das Verhältnis zwischen Oberfläche und Volumen der Bremskörper vergrößert wird und so eine verbesserte Wärmeabfuhr der Bremskörper erfolgt.

Die Bremskörper sind üblicherweise aus Metall, insbesondere aus Aluminiumlegierungen bzw. die Reibwirkung erhöhenden Speziallegierungen hergestellt. Die Bremselemente bzw. die Bremsbeläge sind aus Sintermetallwerkstoffen oder organischen Reibbelägen hergestellt.

Neben dem im Ausführungsbeispiel dargestellten Achtkantprofil der Nabe 16 können auch andere geeignete Profile oder Welle-Nabe-Verbindungen (z.B. Paßfeder, Gleitfeder, Vielkeil, Verzahnung, Polygonprofil, etc.) verwendet werden, mit denen die Bremsscheiben 15, 15' auf der Nabe 16 bzw. direkt auf der Bremswelle drehfest aber axial in Richtung der Drehachse 18 verschiebbar angeordnet sind. An den Bremsscheiben 15, 15' können auch zusätzliche Hülsen ausgebildet sein, welche die Flächenpressung zur Nabe 16 bzw. zur Bremswelle in Umfangsrichtung herabsetzen und die Wärmeabfuhr weiter verbessern können.

Weitere Alternativen und Ausführungen der vorliegenden Erfindung ergeben sich für den Fachmann im Rahmen der anhängenden Ansprüche.

## Patentansprüche

1. Industriescheibenbremse (1), mit mehreren scheibensegmentartig ausgebildeten Bremselementen (10, 23), die eine Bremselementanordnung (27) bilden und einer Bremskörperanordnung (14),
wobei die Bremselementanordnung (27) zwei verstellbare Bremselemente (10) aufweist, die in ihrer Bremsstellung eine Bremswirkung auf außenliegende Radialflächen (22) der Bremskörperanordnung (14) ausüben,
**dadurch gekennzeichnet, daß**
die Bremskörperanordnung (14) wenigstens zwei mit einer Bremswelle drehfest gekoppelte Bremsscheiben (15) aufweist, die so ausgebildet und angeordnet sind, daß deren zueinander weisende Radialflächen (24) jeweils mit einem dazwischen angeordneten, scheibensegmentartig ausgebildeten Bremselement (23) im Eingriff stehen, wenn die verstellbaren Bremselemente (10) ihre Bremsstellung einnehmen.

2. Bremsvorrichtung (1) nach Anspruch 1, bei welcher die Bremsscheiben (15, 15') wenigstens im Wirkungsbereich der Bremselemente (10, 10'; 23, 23') axial zur Bremswelle bewegbar, insbesondere axial verschiebbar, ausgebildet bzw. angeordnet sind.

3. Bremsvorrichtung (1) nach Anspruch 1 oder 2, bei welcher die Bremsscheiben (15, 15') über eine Nabe (16) mit der Bremswelle gekoppelt sind.

4. Bremsvorrichtung (1) nach einem der Ansprüche 2 oder 3, bei welcher die Bremsscheiben (15, 15') über einen in Umfangsrichtung der Bremswelle wirkenden Formschluß, insbesondere über ein Vielkantprofil, auf der Nabe (16) bzw. der Bremswelle angeordnet sind.

5. Bremsvorrichtung (1) nach einem der vorhergehenden Ansprüche, bei welcher die Bremselementanordnung (27) zwei in eine Bremsstellung verstellbare Bremselemente (10) aufweist, die in ihrer Bremsstellung an den jeweils nach außen weisenden Radialflächen (22) der beiden äußeren Bremsscheiben (15) angreifen.

6. Bremsvorrichtung (1) nach einem der vorhergehenden Ansprüche, bei welcher die Bremselementanordnung (27) ein passives Bremselement (23, 23') umfaßt, das derart zwischen den zueinander weisenden Radialflächen (24, 24') zweier benachbarter Bremsscheiben (15, 15') angeordnet ist, so daß es mit diesen Radialflächen (24, 24') im Eingriff steht, wenn das verstellbare Bremselement (10) seine Bremsstellung einnimmt.

7. Bremsvorrichtung (1) nach Anspruch 6, bei welcher ein feststehendes Bremselement (23, 10') als axialer Anschlag ausgebildet ist, an dem die Bremsscheiben (15, 15') anliegen, wenn das verstellbare Bremselement (10) seine Bremsstellung einnimmt.

8. Bremsvorrichtung (1) nach einem der vorhergehenden Ansprüche, bei welcher verstellbare Bremselemente (10) an einem Bremshebelgestänge (4, 5, 20) angeordnet sind, welches über eine Stelleinrichtung (21) betätigbar ist.

9. Bremsvorrichtung (1) nach einem der Ansprüche 1 bis 7, bei welcher das verstellbare Bremselement (10) direkt über eine Stelleinrichtung verstellbar ist.

10. Bremsvorrichtung (1) nach einem der vorhergehenden Ansprüche, bei welcher die Bremselementanordnung (27, 27') an einem gemeinsamen Trägerelement, insbesondere an einer Grundplatte (2) angeordnet sind.

11. Bremsvorrichtung (1) nach einem der vorhergehenden Ansprüche, bei welcher die Bremsscheiben (15, 15') aus einem Leichtmetall, insbesondere einer Aluminiumlegierung ausgebildet sind und/oder die Bremselemente (10, 10'; 23, 23') einen Bremsbelag (11, 11'; 25) aufweisen, der aus einem Sinterwerkstoff insbesondere einem Sintermetall ausgebildet ist.

12. Bremsscheibenanordnung (14, 14') zur Verwendung in einer Bremsvorrichtung (1) nach einem der Ansprüche 1 bis 11, welche wenigstens zwei Bremsscheiben (15, 15') aufweist, die drehfest mit einer Bremswelle koppelbar sind.

13. Bremselementanordnung (27, 27') zur Verwendung in einer Bremsvorrichtung (1) nach einem der Ansprüche 1 bis 11, welche wenigstens ein in eine Bremsstellung verstellbares und wenigstens ein passives Bremselement (10; 10', 23, 23') aufweist, wobei mindestens ein passives (23, 23') derart zwischen den zueinander weisenden Radialflächen (24, 24') zweier benachbarter Bremsscheiben (15, 15') positionierbar ist, daß es mit diesen Radialflächen (24, 24') im Eingriff steht, wenn das verstellbare Bremselement (10) seine Bremsstellung einnimmt.
